# EUROPEAN PATENT APPLICATION

(11) **EP 3 562 118 A1**
(43) Date of publication of application: **30.10.2019**
(21) Application number: 18305497.2
(22) Date of filing: 23.04.2018
(51) Int. Cl.: H04L 29/06, H04L 29/08, G06F 9/50, G06F 9/48, G06F 11/20

(54) **METHOD AND DEVICE FOR MIGRATING A STATEFUL FUNCTION**

(71) Applicant: InterDigital CE Patent Holdings, 75017 Paris (FR)
(72) Inventor: DE VITO, Mario, 35576 Cesson-Sévigné Cedex (FR); ONNO, Stéphane, 35576 Cesson-Sévigné Cedex (FR); LE SCOUARNEC, Nicolas, 35576 Cesson-Sévigné Cedex (FR)
(74) Representative: Huchet, Anne

(57) **Abstract**

In order to migrate a first stateful network function running on a first instance of a processing device to a second stateful network function running on a second instance of the same or another processing device, a salient idea is, after starting the migration, to keep applying the first stateful network function by the first instance only on received data items for which the first stateful network function has an active state corresponding to a source address of the received data item, and to forward the received data item without processing by the first instance to the second instance otherwise, the second instance being in charge of applying the second stateful network function on the data item received from the first instance. Active states are then deactivated in the first stateful network function by detecting when the first instance no longer receives any data item for these active states. When the first stateful network function only has inactive states, the data traffic is steered to the second instance so that the migration can successfully terminate

## Description

### 1. TECHNICAL FIELD

The present disclosure relates to the domain of software migration, in particular the migration of stateful functions.

### 2. BACKGROUND ART

In information technology and computer science a program or a function is described as stateful if it is designed to remember preceding events or interactions. The remembered information is called the state of the function. The function internal behaviour or interaction with its environment consists of processing separately occurring events that may or may not cause the function to change its state. A stateful function may need to be migrated from a first processing instance to a second processing instance for several reasons, such as for example maintenance or hardware upgrade purpose. Indeed, the hardware of the processing device running the first instance may need to be upgraded for a more powerful hardware. A stateful function running in a first computing instance of a first processing device may be migrated to a second computing instance running on a second processing device equipped with a more powerful hardware without interrupting the service provided by the stateful function. In another example migrating a stateful function allows to scale up/down the system in order to adjust to some elastic requirements. However, preserving the service operation while the stateful function is migrated is generally complex. Depending on the stateful functions, the migration may or may not tolerate a loss of events or data. Some techniques are known for migrating stateful functions without a loss of events, by freezing data connections during the migration. Freezing data connections however creates some latency in the data processing during the migration. These techniques defer the prevention of event loss to reliable communication protocols such as TCP or HTTP, recovering lost events via retransmission. There is however no technique for recovering lost events for unreliable protocols. Some stateful network functions, such as for example network intrusion detection systems rely on finite state automata based on processing a regular expression on received packets. Packet lost during a migration can cause a disruption of the network function behaviour. The present disclosure has been designed with the foregoing in mind.

### 3. SUMMARY

In order to migrate a first stateful network function running on a first instance of a processing device to a second stateful network function running on a second instance of the same or another processing device, a salient idea is, after starting the migration, to keep applying the first stateful network function by the first instance only on received data items for which the first stateful network function has an active state corresponding to a source address of the received data item, and to forward the received data item without processing by the first instance to the second instance otherwise, the second instance being in charge of applying the second stateful network function on the data item received from the first instance. Active states are then deactivated in the first stateful network function by detecting when the first instance no longer receives any data item for these active states. When the first stateful network function only has inactive states, the data traffic is steered to the second instance so that the migration can successfully terminate.

To that end a method for migrating a first stateful function running on a first instance to a second stateful function running on instance is disclosed. The first and the second stateful functions process data items of a data flow according to respectively a first and a second set of states. The method comprises in the first instance:
- receiving an egress data item from the data flow, the egress data item comprising a source address of an initiator of a data exchange;
- applying the first stateful function to the egress data item if an active state of the first set of states corresponds to the source address of the egress data item, else migrating the first stateful function by:
   ∘ forwarding the egress data item to the second instance for applying the second stateful function by the second instance;
   ∘ inactivating the active state when no data item corresponding to the active state has been received over a period of time, the data flow being steered to the second instance when all states of the first set of states are inactive.

In a second aspect, a processing device for migrating a first stateful function running on a first instance to a second stateful function running on a second instance is also disclosed. The first instance is running on the first processing device, the first and the second stateful functions process data items of a data flow according to respectively a first and a second set of states. The first processing device comprises processing means for running the first instance, wherein the first instance is configured to
- receive an egress data item from the data flow, the data item comprising a source address of an initiator of a data exchange;
- apply the first stateful function to the egress data item if an active state of the first set of states corresponds to the source address of the egress data item, else migrating the first stateful function by:
   ∘ forwarding the egress data item to the second instance for applying the second stateful function by the second instance;
   ∘ inactivating the active state when no data item corresponding to the active state has been received over a first period of time, the data flow being steered to the second instance when all states of the first set of states are inactive.

In a third aspect, a computer program product for migrating a first stateful function running on a first instance to a second stateful function running on a second instance is also disclosed. The computer program product comprises program code instructions executable by a processor for performing the method implemented in any of its variants.

In a fourth aspect, a non-transitory computer-readable storage medium storing computer-executable program instructions for migrating a first stateful function running on a first instance to a second stateful function running on a second instance is also disclosed. The computer-readable storage medium comprises instructions of program code executable by at least one processor to perform the method implemented in any of its variants.

While not explicitly described, the present embodiments may be employed in any combination or sub-combination. For example, the present principles are not limited to the described variants, and any arrangement of variants and embodiments can be used. Moreover, the present principles are not limited to the described stateful function examples and any other type of stateful function is compatible with the disclosed principles.

Besides, any characteristic, variant or embodiment described for a method is compatible with a device comprising means for processing the disclosed method, with a device comprising a processor configured to process the disclosed method, with a computer program product comprising program code instructions and with a non-transitory computer-readable storage medium storing program instructions.

### 4. BRIEF DESCRIPTION OF THE DRAWINGS

- **Figure 1** illustrates an example of a method for migrating a first stateful network function running on a first instance to a second stateful network function running on a second instance according to a specific and non-limiting embodiment of the disclosed principles;
- **Figure 2A, 2B****,** **2C and 2D** illustrate four steps of a migration of a first stateful network function running on a first instance to a second stateful network function running on a second instance according to a specific and non-limiting embodiment of the disclosed principles;
- **Figure 3** represents a processing device running an instance of a migrating stateful function according to a specific and non-limiting embodiment of the disclosed principles;
- **Figure 4** represents an exemplary architecture of the processing device of figure 3 according to a specific and non-limiting embodiment of the disclosed principles.

It should be understood that the drawing(s) are for purposes of illustrating the concepts of the disclosure and are not necessarily the only possible configuration for illustrating the disclosure.

### 5. DESCRIPTION OF EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses issues related to stateful functions migration. By stateful function, it is meant here and throughout the document a computer program comprising program code instructions executable by a processor for processing a data item according to a set of states. In computer science a function is defined as stateful if it is designed to remember preceding events or interactions, the remembered information being called the state or more generally the set of states. Throughout the document, the disclosed principles will be described for stateful network functions where data items are received from a network interface, but the disclosed principles are equally applicable to any kind of stateful functions processing data items received by some other means such as for example and without limitation an inter process communication mechanism, or a shared memory coupled with any synchronization mechanism. The disclosed principles are for example applicable to gateway software upgrades, where a gateway provides for example and without limitation internet access, and various home networking services to customer premises.

In a first example, a gateway software is composed of network function services running on different processes of the gateway and able to communicate with each other. Such gateway architectures are referred as modular routers. Gateways can be deployed as gateway processing devices at customer premises by network operators for locally providing network services. The disclosed principles are thus applicable to upgrading at least one stateful network function hosted on a gateway processing device, wherein the at least one stateful network function can be upgraded separately from the rest of the gateway software. Such separately upgradable stateful network function, run for instance on a dedicated process (or set of processes) of the gateway processing device. Applying the disclosed principles to such stateful network function hosted on a gateway processing device advantageously allows to apply security patches on a stateful network function without interrupting the service. Security vulnerabilities may have been discovered by a service provider on one or more stateful network functions embedded in gateways he is operating. The service provider may desire to apply one or more security patches to the vulnerable stateful network functions without any service disruption of the gateway. According to the disclosed principles, as a first stateful network function corresponding to the vulnerable stateful network function is running on a first instance (a process for example) of the gateway processing device, a second stateful network function is downloaded and started on a second instance (for example another process) of the same gateway processing device, the second stateful network function corresponding to a patched version of the first stateful network function. The first (vulnerable) stateful network function is then advantageously migrated to the second (patched version of the) stateful network function running on the second instance. In that example the separately upgradable network function may be without limitation a Network Address Translation (NAT), and/or a stateful network firewall and/or a stateful application firewall using deep packet inspection. The concepts of vulnerable stateful function and of patch application only have illustration purposes and the disclosed principles are not limited to the application of software patches to stateful functions.

In a second example the upgradable software corresponds to the overall gateway software. Nowadays, some network providers deploy virtual gateways in data centers. A virtual gateway comprises most of the software of a legacy gateway and runs on a cloud computing infrastructure. A virtual gateway generally also relies on a very basic hardware deployed in the customer premises. A virtual gateway is another example of a (more complex) stateful network function that can be migrated from a first version running on a first instance to a second version running on a second instance according to the disclosed principles. Migrating a first virtual gateway software running on a first instance to a second virtual gateway software running on a second instance allows upgrading the virtual gateway software from a first version to a second (backward compatible) version, without needing to stop or interrupt the service during the migration. Indeed, as the migration is data loss less, virtual gateway upgrade can be done without risking a software crash due to a lost data item during the migration.

According to a specific and non-limiting embodiment, the first and the second stateful network functions are a single version of a same stateful network function. Migrating a single version of a same stateful network function from a first instance to a second instance is advantageous for several scenarios, including without limitation scaling or hardware upgrade purposes. While upgrading the hardware on which the stateful network function is running by a more powerful hardware, a same version of the stateful network function can be advantageously migrated from a first instance running on the old hardware to a second instance running on the new and more powerful hardware. Examples of such stateful network functions comprise, without limitation, a virtual gateway software, a Network Address Translation (NAT), a stateful network firewall, a stateful application firewall using deep packet inspection, a network intrusion detector.

By data item, it is meant here and throughout the document a set of bytes that can be exchanged over a network interface with other devices or logical entities. A data item is for example a data packet, or a data frame, or a protocol data unit of any communication protocol. Any kind of data package is compatible with the disclosed principles. Whenever at least two devices exchange data packets over communication networks, one of the devices initiates the data exchange. The expression egress data item designates a data item belonging to a data exchange according to a communication protocol and being sent by a device having initiated the data exchange. The expression ingress data item designates a data item belonging to the data exchange according to the communication protocol and being sent by a participating device, different from the device having initiated the data exchange.

In a first example, wherein the communication protocol is connection oriented such as the Transport Control Protocol (TCP), an egress data item is a TCP packet, sent by the initiator of the TCP connection. An egress data item is for example the TCP SYN packet and all the following TCP packets related to the same connection sent by the device having sent the TCP SYN packet. Reciprocally an ingress data item is any data item sent by the device to which the TCP connection is opened. More generally, for any connection-oriented protocol, an egress data item is any data packet, sent by the initiator of a connection of the protocol, and an ingress data item is any data packet sent by a device to which a connection has been opened.

In a second example, the communication protocol is connection less and based on successive acknowledged (or unacknowledged) data transmissions, wherein the successive data transmissions occur within a given time period. According to the second example the device who initiated the data exchange is the device having sent the first data item of the data exchange. Given a set of successive data item transmissions, the first data item is defined as the data item which transmission occurred at first. According to the second example, the egress data item is any data packet, sent by the initiator of the transmission of a set of successive data items. Reciprocally an ingress data item is any data item sent a device participating to the data exchange without having initiated it. More generally, an egress data item is a data packet, originating from an initiator of a data exchange according to a communication protocol of any type, and an ingress data item (if any) is a data packet belonging to the same data exchange sent by a device different from the initiator of the data exchange. An example of such connection less protocol is User Datagram Protocol.

According to a specific and non-limiting embodiment of the disclosed principles, stateful network functions process data items between a first network and a second network via a first and a second network interfaces. The first network is for example a (home) private network and the second network is a (wider) public network. According to this specific and non-limiting embodiment, any data item received from the first network interface (called egress network interface) is an egress data item. Reciprocally any data item received from the second network interface (called ingress network interface) is an ingress data item. But the disclosed principles are equally applicable to a single network interface, aggregating both the ingress and egress data traffic in a single network interface towards the stateful network function. When the ingress and the egress data traffic is aggregated into a single data traffic, the ingress and the egress data items can be differentiated depending on whether they originated from an initiator of a data exchange or not, as described hereabove.

For the sake of clarity when the term "data item" is used without referring explicitly to egress or ingress data item, the corresponding description applies to both an egress and an ingress data item.

By first or second instance, it is meant here and throughout the document a first or a second instance of a stateful network function running on a dedicated hardware resource of one or more processing devices. The hardware resource is for example available via a virtualizing layer, such as for example a hypervisor. The hardware resource includes for example (a part of) a processor, a digital signal processor, a network processor, and more generally any slice of a hardware resources allowing to receive, process, and transmit a data item, including modifying and storing a state of the function. The processing devices are for example hosted in a data center, and the first and second instances are running on different processing devices. In another example the first and the second instances run as different process of a same processing device.

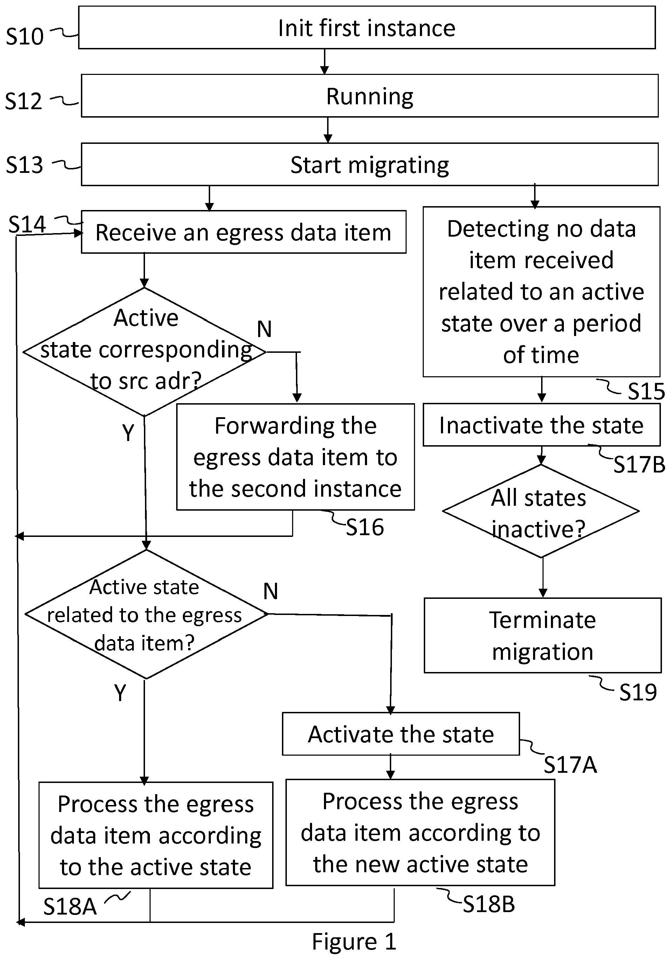

**Figure 1** illustrates an example of a method for migrating a first stateful network function running on a first instance, running on a processing device to a second stateful network function running on a second instance running on the same or another processing device according to a specific and non-limiting embodiment of the disclosed principles. More precisely, **Figure 1** illustrates the disclosed principles from the perspective of the processing device hosting the first instance of the migrating first stateful network function, noted SNF1. The first stateful network function processes data items of a data flow according to a first set of states. Similarly, the second stateful network function processes data items according to a second set of states. As previously mentioned the first and the second set of states correspond to the information memorized by respectively the first and the second stateful network functions at least between the processing of subsequent data items. For the sake of clarity and without loss of generality the first and the second set of states each comprise states being either active or inactive. The (first or second) set of states may be for example a part of a memory wherein different subparts correspond to the different states. According to that example a flag for example indicates whether a state is active or inactive. Creating a new state corresponds to select a subpart of the memory corresponding to an inactive state and to activate that state (i.e. switch the flag from inactive to active). In a second example, there is no pre-allocated memory for the set of states, and each time a state is created a specific memory is allocated for that new state, and when the state is inactivated, the corresponding memory is freed. These two examples are not limiting the way a set of states may be implemented, and any form of data structure comprising active and inactive subparts representing the memorized information of a stateful function is compatible with the disclosed principles. In the remaining of the description creating or activating will be equally used to describe a state activation. Similarly deleting or inactivating a state is equally used to describe a state removal or deletion.

The data flow corresponds to a consistent set of data items to be processed by a stateful network function. Considering a single device running different instances, a data flow may be any consistent set of data exchanged between both instances. Considering a data center hosting a plurality of processing devices interconnected via a network within the data center, the data center network is configured to route data flows to processing devices according to various rules. Various encapsulations are possible for routing a data item to a processing device, such as for example layer two encapsulation (where data items are encapsulated in layer two frames using the MAC address of the processing device as destination MAC address), or layer three encapsulation (where data items are encapsulated in IP packets using an IP address of the processing device as destination IP address). Without limitations, such encapsulations are for example according to the Generic Routing Encapsulation (GRE), Virtual Extensible LAN (VXLAN), Network Service Header (NSH). According to this particular and non-limiting embodiment, a data flow corresponds to the data items routed to a particular instance of a particular processing device. But any kind of data flow representing a consistent set of data items (i.e. wherein the items of the data flow share common values for a set of data fields) is compatible with the disclosed principles. Moreover, the disclosed principles are not limited to processing devices running in a data center and are also applicable to a migration between processing devices located at any location.

In the step S10, the first instance is initialized, which comprises initialization of the first stateful network function running on the first instance SNF1 and of the first set of states (to for example no state, or all inactive states). In the step S12, SNF1 is running by receiving and processing data items of a data flow according to the first set of states.

In the step S13, SNF1 receives an indication to start migrating to SNF2. In a first example the request is received from a local user interface. In a second example the request is locally generated based on a timer. In yet another example the request is received from a configuration manager running on the same processing device or another processing device via the network interface. The indication comprises at least an identifier of SNF2, allowing SNF1 to send data to SNF2. For example, the configuration manager establishes a data path between SNF1 and SNF2 in the data center network allowing information exchange between both instances. In another example, where both the first and the second instances run on the same processing device, the configuration manager establishes a data path in the processing device between both instances, via for example inter-process communication. Advantageously, the data connections flowing through the migrating first and second stateful functions are not stopped, and data items are kept flowing during the migration.

In the step S14, an egress data item comprising a source address of an initiator of a data exchange is received from a network interface of the processing device running SNF1. For the sake of clarity and without loss of generality the disclosed principles will be described with an Internet Protocol (IP) source address, but any other kind of source address, such as a Medium Access Control (MAC) address, or any logical identifier identifying the origin of the egress data item is compatible with the disclosed principles.

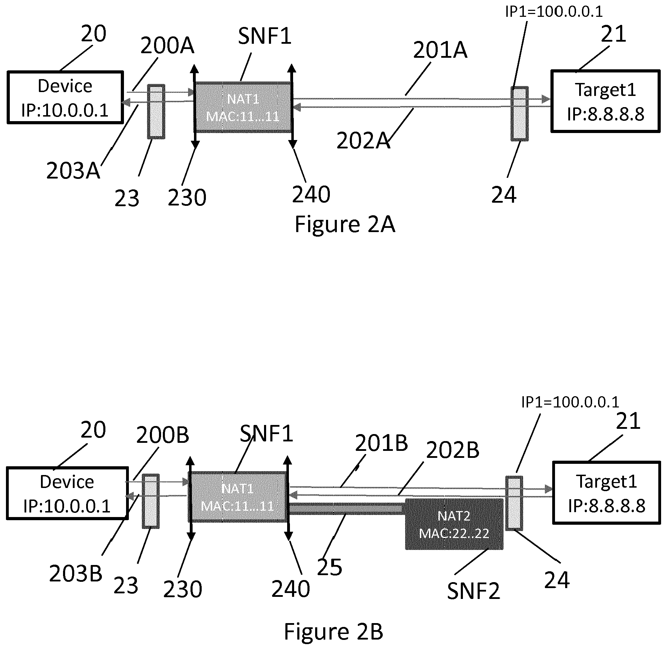

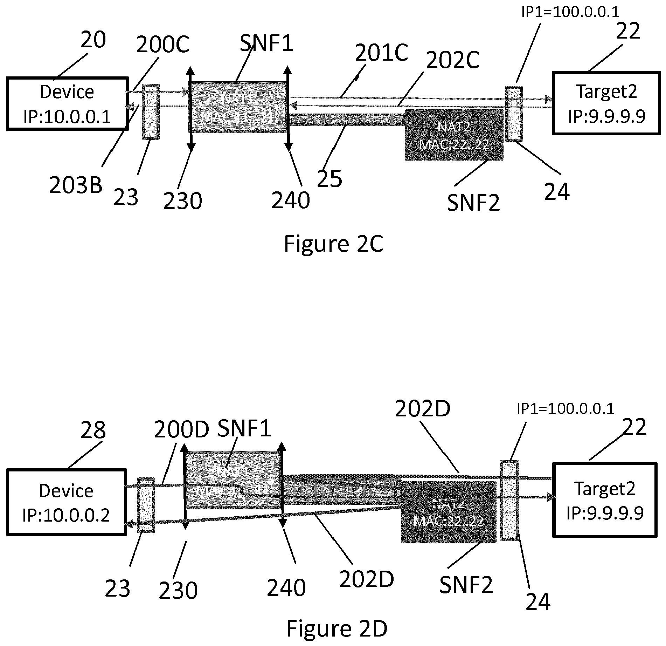

An egress key is extracted from the egress data item, wherein the egress key corresponds for example to a concatenation of various fields or sub parts of the received egress data item. Taking the non-limiting example of a NAT SNF1 (that will be detailed further below with Figures 2A, 2B, 2C and 2D), an egress key corresponds for example to a tuple comprising at least a source IP address and a source port identifier of an egress data item. The egress key may optionally further comprise the destination IP address, the destination port identifier and the transport protocol in use in the egress data item. But any other type of egress key extracted from the egress data item is compatible with the disclosed principles.

Reciprocally an ingress key is extracted from an ingress data item, wherein the ingress key corresponds for example to a concatenation of various fields or sub parts of the received ingress data item. Taking the non-limiting example of a NAT SNF1 (that will be detailed further below with Figures 2A, 2B, 2C and 2D), an ingress key corresponds for example to a tuple comprising the source IP address, the destination IP address, the source and the destination port identifiers of the ingress data item. But any other type of ingress key extracted from the egress data item is compatible with the disclosed principles.

If the first set of states comprises an active state corresponding to the source address of the egress data item, the first stateful network function is applied to the egress data item by the first instance SNF1. If the first set of states does not comprise any active state corresponding to the source address of the egress data item, the first stateful network function is not applied to the egress data item by the first instance SNF1, and the egress data item is forwarded to the second instance SNF2 in the step S16 for applying the second stateful function to the egress data item by the second instance SNF2.

In a first variant, the active state corresponding to the source address of the egress data item is related to the egress data item itself. In other words, the egress key extracted from the received egress data item corresponds to an active state in the first set of states, because for example a preceding egress data item has been received with the same source IP address and source port identifier (leading to a same egress key), a state has already been created, and the preceding data item has already been processed by SNF1 according to the active state. According to this first variant, if the first set of states comprises an active state corresponding to the extracted egress key, the data item is processed according to the extracted egress key in the step S18A.

In a second variant, the first set of states comprises an active state corresponding to the source address of the egress data item, but the active state is not related to the received egress data item. The active state is related to another previously received egress data item, belonging for example to a different connection than the currently received egress data item, but received with a same source address. Said differently, according to the second variant, as the egress data item is received by SNF1, the first set of states may not comprise any active state corresponding to the egress key, although the first set of states comprises an active state corresponding to the source address of the egress data item but leading to a different egress key. For example, a previous egress data item was previously received by SNF1 with a source address and a first source port identifier. The current egress data item is received with the same source address but a second source port identifier different from the first source port identifier. No egress data item was previously received by SNF1 from that source IP address and that second source port identifier. According to the second variant, if the first set of states does not comprise any active state corresponding to the key, although the first set of states comprises an active state corresponding to the source address of the egress data item, a new state is activated in the first set of states in the step S17A and, the egress data item is further processed in the step S18B by the first stateful network function running in SNF1 according to the new active state. In an optional and non-limiting example, a counter associated with a source address is incremented each time a new state corresponding to the source address is activated in the first set of states, and the counter associated with the source address is decremented each time an active state corresponding to the source address is inactivated in the first set of states. When a counter associated with a source address reaches the zero value, it indicates there is no active state corresponding to that source address in the first set of states. Any egress data item received from a source address after its counter reached the zero value will be forwarded without applying the first stateful function by SNF1 to the second instance SNF2 for applying the second stateful function to the egress data item by the second instance SNF2.

According to the disclosed principles, any conflicting situation is advantageously avoided between the first and the second stateful functions sharing a set of global resources for a given source address, without the need of any explicit data synchronization between the first and the second instances. Furthermore, a first stateful network function can be advantageously upgraded into a second backward compatible stateful network function without interrupting the service provided by the network function.

According to a specific and non-limiting embodiment of the disclosed principles, the method further comprises receiving an ingress data item from the data flow. It is then determined whether the first set of states comprises an active state corresponding to the ingress data item. For that purpose, an ingress key is for example extracted from the ingress data item, and it is determined whether the first set of states comprises an active state corresponding to the extracted ingress key. If the first set of states comprises an active state corresponding to the received ingress data item, the ingress data item is processed by the first stateful function SNF1 according to that active state. If the first set of states does not comprise any active state corresponding to the ingress data item, the ingress data item is forwarded without any processing by the first stateful network function SNF1 to the second stateful network function SNF2, for being processed by the second stateful network function SNF2. Contrary to the egress data items, the processing by SNF1 or the forward to SNF2 is only determined by the presence of an active state in the first set of states for the ingress data item and is not condition to any active state of any other ingress data item originating from a same device (and comprising a same source address). When the migration is terminated, the ingress data items are no longer forwarded to SNF2.

Once a new state has been activated in the first set of states, the reception of (egress and/or ingress) data items corresponding to the active state is monitored to detect in the step S15 when no data item corresponding to an active state is received over a period of time in order to inactivate the active state in the step S17B. In a first variant, only egress data item reception is monitored to detect when no egress data item corresponding to an active state is received over a period of time so as to inactivate the active state. In a second variant both the egress and ingress data item receptions are monitored to detect when neither an egress nor an ingress data item corresponding to an active state is received over a period of time to inactivate the active state. Such a period of time is for example and without limitation one or two hours duration. Any period of time duration is compatible with the disclosed principles. According to different variants, inactivating the state comprises freeing the corresponding memory subpart, or switching a flag from active to inactive for the corresponding state. Several variants are also possible for detecting a lack of data item reception corresponding to an active state over a period of time. In a first variant, the detection of the lack of data item reception for an active state is based on timers and timeouts. As a data item corresponding to an active state is received, a timer of the period of time duration is (re-)started for that active state. A time-out of the timer for an active state indicates no data item has been received for that active state over the period of time, so that the active state has to be inactivated. In a second variant, as a data item is received, a time of reception is recorded as part of the information of the active state. On a regular basis, the last recorded reception time of a data item for an active state is checked against the current time. A difference between the current time and the last recorded reception time greater than the period duration, indicates no data item has been received for that active state over the period of time. More generally, any technique for detecting a lack of data item reception for each active state of the first set of states over a period of time is compatible with the disclosed principles.

The disclosed principles also comprise detecting when all states of the first set of states are inactive after the migration started. When all the states of the first set of states are inactive, the migration terminates in the step S19. At that point, the first instance SNF1 receives only (egress and/or ingress) data items corresponding to inactive states and forward them without any processing to the second instance SNF2. The traffic of the data flow is then steered to the second instance SNF2. When the first instance detects it does not receive any data item from the data flow anymore (according to any variant described above), the first instance can terminate. Steering the traffic from the first to the second instance is done for example by a configuration manager software module running in the same or another processing device by modifying the configuration of the data center network or the internal inter-process communication system, so that the data items initially targeted to the first stateful function running on the first instance SNF1 are directed to the second stateful function running on the second instance SNF2. In case SNF1 and SNF2 are running on different processing devices, this may be accomplished by various techniques such as for example and without limitation, reconfiguring the control plane of the data center network according to the software defined network architecture. If both processing devices are not located in a same data center, they are interconnected via one or more networks. In such a case the data path is set up according to any kind of tunnelling protocol running over the one or more networks.

According to any of the above examples, the network or the inter-process communication system is advantageously reconfigured without freezing the data traffic. As the data connections are not stopped while the network/process paths are adjusted, there is no service interruption of the stateful network function during the migration.

**Figure 2A, 2B****,** **2C and 2D** illustrate a few steps of a migration of a first stateful network function running on a first instance of a processing device to a second stateful network function running on a second instance of the same or another processing device according to a specific and non-limiting embodiment of the disclosed principles. For the sake of clarity and without limitation, throughout **Figures 2A** to **2D** the first and the second stateful network functions are a same version of a stateful network function processing data items according to a set of states. But, the disclosed principles are equally applicable to situations where the first and the second stateful network functions are different backward compatible versions of a same function processing data items according to respectively a first and a second set of states. According to a specific and non-limiting embodiment, the stateful network function is processing data items between an egress network interface 230 (corresponding for example to a private network) and an ingress network interface 240 (corresponding for example to a public network). But, as previously mentioned, the disclosed principles are equally applicable to a single network interface, aggregating both the ingress and egress data traffic in a single network interface towards the stateful network function.

Such stateful functions process egress 200A, 200B, 200C and ingress 202A, 202B, 202C data items according to a set of states, wherein some ingress data items 202A, 202B, 202C are received in response to some previously processed egress data items 201 A, 201B, 201C. More precisely, processing an egress data item 200A, 200B, 200C comprises extracting an egress key from the egress data item 200A, 200B, 200C. If the set of states comprises an active state corresponding to the extracted egress key, the egress data item 202A, 202B, 202C is processed according to the active state, otherwise (if the set of states does not comprise any active state corresponding to the extracted egress key), a new state is activated in correspondence to the extracted egress key. The new state activation may for example comprise allocation of some data. Processing an ingress data item 202A, 202B, 202C (potentially coming in response to an egress data item 200A, 200B, 200C) comprises extracting an ingress key from the ingress data item 202A, 202B, 202C. If the set of states comprises an active state corresponding to the extracted ingress key, the ingress data item 202A, 202B, 202C is processed according to the active state, otherwise (if the set of states does not comprise any active state corresponding to the extracted ingress key), the ingress data item 202A, 202B, 202C is dropped (deleted) and not forwarded back to the egress network interface 230. Examples of such stateful network function include without limitations NAT and stateful firewalls (both network and applicative firewalls).

The set of states comprises states wherein a same active state is accessible via both an egress key and an ingress key. For the sake of clarity, the set of states is described as a symmetric table, where a same table entry can be queried using two different keys. A symmetric table for example comprises two unidirectional tables (an egress table and an ingress table), wherein creating or updating a state in the set of states comprises creating or updating the state in both the egress table and the ingress table. The ingress and the egress tables are for example hash tables or key value store tables where the egress/ingress keys are the hashes or keys and the states are the entries (the values) of the table. Any kind of data structure configured to store a set of states wherein a same state is accessible by two different keys is compatible with the disclosed principles. For the sake of clarity, the disclosed principles are described using states for describing the remembered information of the stateful function. A state may be any kind of data structure storing information, including but not limited to integer or float values, strings, tuples of strings and/or values of any type and size.. A state typically comprises information related to a connection such as for example and without limitations, timeout values, port mappings, ...).

### NAT specific and non-limiting embodiment

In its simplest form a NAT uses a single public IP address and translates a private IP source of an egress packet to the single public IP address. It further allocates a port identifier in a range of port identifiers and translates the source port of the egress packet by the allocated port identifier, also called translated port identifier. In more complex forms, a NAT may use a pool of IP public addresses. In such a case, port identifiers are allocated per public IP address. The correspondence [(IP source address, source port)-> public IP address, allocated port] is stored as a state in the set of states, generally called a port map table and further used to translate back a response packet coming in an ingress data item.

According to a specific and non-limiting NAT embodiment, an egress key, extracted from an egress data item comprises the source IP address, the destination IP address, the source and the destination port identifiers. As the source and destination port identifiers relate to a transport protocol (such as TCP or UDP), an indication of the transport protocol (TCP or UDP) is further optionally comprised in the egress key. For the sake of clarity and without loss of generality, the disclosed principles are described using most popular NAT that use four tuple values to allocate port identifiers (both source and destination IP addresses, and both source and destination port identifiers). But other NATs, allocating ports based on only the source IP address and the source port identifier are also compatible with the disclosed principles.

According to the specific and non-limiting NAT embodiment, activating a new state corresponding to an extracted egress key comprises allocating a new port identifier among the port identifiers not already used by the NAT for that IP source address, and storing the new port identifier in the mapping table (set of states), together with the source IP address and port of the egress key as original source IP address and original port identifier. In a variant, where the NAT uses a pool of public IP addresses, the active state further comprises the public IP address of the pool to be used together with the new allocated port identifier. According to the NAT embodiment, processing the egress data item comprises translating the source IP address and the source port of the received egress data item into respectively the public IP address and the allocated (translated) port identifier according to the active state (port map) corresponding to the egress key. The disclosed principles are advantageous in the NAT case because a full and common range of port identifiers can be used by both instances SNF1 and SNF2 involved in the migration without risking any conflict in allocating port identifiers. Some prior art methods are known to split a range of available port identifiers between the migrating instances SNF1, SNF2 so that ports allocated by SNF2 are not conflicting with ports allocated by SNF1 after the migration started. According to the disclosed principles, a common range of port identifiers can be used between SNF1 and SNF2 and no explicit synchronization of metadata transfer between them is needed during the migration. Indeed, processing an egress data item by SNF1 as long as there remain active states corresponding to egress data items originating from a same source address, and forwarding the egress data item without processing by SNF1 to SNF2 for a processing by SNF2, as soon as there is no active state in SNF1 corresponding for any egress data item originating from a same source address, allows to avoid sharing and thus synchronizing any information between both instances. Since the state information (allocated ports) is allocated based at least on the source address, the disclosed principles allow avoiding any conflicting situation between both instances without freezing the traffic during the migration by maintaining the processing in the first instance as long as egress data items are received with a source address corresponding to an active state. As soon as no state corresponding to the source address remains active in the first set if states, then new allocation for that egress data item can be done without risking any conflict in the second set of states by the second instance. The egress data item is thus advantageously forwarded without processing by the first instance to the second instance. More generally the disclosed principles are equally applicable to stateful network functions wherein a pool of states share a same set of global resources (a range of ports) for a given source address.

According to the NAT embodiment, the ingress key extracted from an ingress data item comprises the source IP address, the destination IP address, the source and the destination port identifiers of the ingress data item. As the source and destination port identifiers relate to a transport protocol (such as TCP or UDP), an indication of the transport protocol (TCP or UDP) is optionally further comprised in the ingress key. It is to be noted that the source IP address and port identifier of an ingress key correspond to the destination IP address and port identifier of an egress key for a same state. However, the destination IP address and port identifier of the ingress key are different from the source IP address and port identifier of the egress key for that same state. Querying the set of state with the extracted ingress key allows to retrieve the state that comprises the original source IP address and port to be translated back. According to the NAT embodiment, if the set of states comprises an active state (port map) corresponding to an ingress extracted key, processing the ingress data item comprises translating the destination IP address and the destination port of the received ingress data item into respectively the original IP address and the original port according to the port map corresponding to the ingress key. According to the NAT embodiment and whenever the NAT function is not migrating, if the set of states does not comprise any active state (port map) corresponding to the extracted ingress key, processing the ingress data item comprises deleting the ingress data item (or at least not forwarding the data item back to the egress network interface), as the ingress data item does not correspond to any previous egress data item. According to the NAT embodiment, after the migration started, if the first set of states does not comprise any active state (port map) corresponding to the extracted ingress key, the ingress data item is forwarded without any processing (translation or drop) by SNF1 to SNF2 for being processed (translated or dropped) by SNF2 according to the second set of states.

### Stateful Firewall specific and non-limiting embodiment

In a first variant, the stateful firewall is a network firewall and operates in conjunction of a NAT. Same ingress and egress keys as for the NAT embodiment are used. In addition to the NAT embodiment which only drops ingress data items if there is no state in the set of states corresponding to the ingress key, the firewall may decide to drop ingress packets according to further rules. For example, the firewall may monitor the time of reception of egress data items for a given state, to keep forwarding back ingress data items only when they are received within a time interval of a fixed duration from the reception of last egress data item. This allows to drop ingress data items received too far from a preceding egress data item for a given state. According to that example, processing an egress data item for a new active state comprises storing a time of reception of the egress data item by the processing instance, and processing an egress data item for an existing active state comprises updating the state with the time of reception of the egress data item by the processing instance.

In another example the firewall monitors the current stage of a connection (corresponding to a state in the disclosed principles), including but not limited to session initiation, handshaking, data transfer and completion connection. Taking the example of the TCP (Transport Control Protocol) protocol, the state comprises information on the stage of the protocol (session, initiation, handshaking, data transfer, completion connection), and for each stage some further information describing expected next steps of the protocol (i.e. what type of egress/ingress TCP packets are expected at that stage of the protocol). Such firewalls are useful to protect against network attacks. According to that example, processing an egress and/or an ingress received data item for an active state comprises updating the information describing the current stage of the protocol and updating the expected next steps of the protocol. In addition, processing an egress and/or an ingress data item for an active state further comprises blocking the egress and/or the ingress data item in case the (egress and/or ingress) data item does not correspond to an expected next step of the protocol.

In a second variant, the stateful firewall is a network firewall not operating in conjunction of a NAT. In such a variant, the ingress and the egress keys are equivalent, both comprising source IP address and port identifiers as well as destination IP address and port identifiers, wherein the source (IP address and port) of an egress key corresponds to the destination (IP address and port) of the egress key for the same state. All the features of the first variant are also applicable here.

In a third variant, the stateful firewall is an application firewall. According to that variant, the egress and ingress keys are extracted according to the first or the second variant. In addition, some further information is extracted from the data items via for example a deep packet inspection technique, to further monitor states of upper protocols such as for example and without limitation HTTP (HyperText Transfer Protocol) or SSL (Secure Socket Layer), so as to check that responses are consistent with requests, or that data items do not include corrupted data, such as virus. Further information includes for example and without limitation data about cookies and SSL session identifiers. According to that variant, processing an egress and/or an ingress data item for an active state is similar to the first variant, i.e., comprising updating the information describing the current stage of a protocol and updating the expected next steps of the protocol. In addition, processing an egress and/or an ingress data item for an active state further comprises blocking the egress and/or the ingress data item in case the (egress and/or ingress) data item does not correspond to an expected next step of the protocol.

**Figure 2A** represents the first instance of the stateful network function SNF1 prior to the migration. For the purpose of the illustration, a NAT stateful network function is described below. According to the illustrative example, the device 20 has an IP address (IP:10.0.0.1) sends an egress data item 200 targeted to the target device 21 having an IP address (IP:8.8.8.8). Considering the device 20 uses port 1000 as source port and port 8000 as destination port, the egress data item 200 is written as (10.0.0.1, 1000 -> 8.8.8.8, 8000). The egress data item 200 is received by a communication equipment 23 of the data center network that redirects the egress data item 200 to the processing device running SNF1 by for example encapsulating the egress data item in a layer 2 frame using the MAC address 11..11 of the processing device running SNF1.

Referring to **Figure 2A****,** SNF1 receiving the egress data item 200A (10.0.0.1, 1000 -> 8.8.8.8, 8000), processes the egress data item as follow: if there is no port map entry (active state) in the port map table (set of states), SNF1 allocates a new port value among the unused values (for example 100) and stores a new entry in the key value store port map table (activate a new state). The egress data item 200A is then processed by translating the source IP address to the public IP address (for example 100.0.0.1) and the source port by the allocated port. The processed egress data item 201A (100.0.0.1, 100 -> 8.8.8.8, 8000) is sent by SNF1 via the ingress network interface. The processed egress data item 201A is received by a further communication equipment 24 of the data center and routed to the target device 21, which replies by sending an ingress data item 202 (8.8.8.8, 8000 -> 100.1.1.1, 100) targeted to the IP public address on the allocated port 100. SNF1, receiving the ingress data item 202A, extracts an ingress key. As the first set of states (port map table) comprises a state (existing port map entry according to the current example) corresponding to the ingress key, SNF1 processes the ingress data item 202A according to the port map entry, i.e. by translating the destination IP address and port into respectively the original source IP address and the port of the port map entry. The processed ingress data item 203A (8.8.8.8, 8000 -> 10.1.1.1, 1000) is sent by SNF1 to the device 20 via the egress network interface.

**Figure 2B** represents the first instance of the stateful network function SNF1, processing data items after the migration started according to an active state corresponding to the source address and related to an egress data item. According to the illustrative example, the second instance SNF2 has been created and started on a second processing device. A data path 25 has been created, for example by a configuration manager. The data path 25 allows SNF1 and SNF2 to exchange data over the data center network. More precisely, the data path 25 allows SNF1 to forward a currently received egress data item to SNF2 when the set of states of SNF1 does not comprise any active state corresponding to any previously received egress data item comprising the same source address as the currently received egress data item. The data path 25 also allows SNF1 to forward ingress data items to SNF2 when the set of states of SNF1 does not comprise any active state corresponding to the ingress data item.

In the example depicted in Figure 2B, SNF1 receives a further egress data item 200B (10.0.0.1, 1000 -> 8.8.8.8, 8000) with the same source and destination address and ports as the previous egress data item 200A, its set of states comprises an active state corresponding to the extracted egress key. Although the migration already started, the egress packet is processed by SNF1 without being forwarded to SNF2.

Similarly, in the reverse direction, SNF1 receives an ingress data item 202B as a response to the egress data item 200B, and an ingress key is extracted from the data item. As the ingress key corresponds to an active state of its set of states, SNF1 processes the ingress data item. In case the extracted ingress key would not correspond to any active state, the ingress data item would be forwarded to SNF2 (not represented), as the migration started.

**Figure 2C** represents the first instance of the stateful network function SNF1, processing data items after the migration started according to an active state corresponding to the source address but not related to the data item. Similarly to **Figure 2B****,** the second instance SNF2 has been created and started on a second processing device. A data path 25 has been created, for example by a configuration manager. In that example, SNF1 receives another further egress data item 200C (10.0.0.1, 1000 -> 9.9.9.9, 8000) with the same source address as the previous egress data items 200A, 200B, but directed to another target device 22 (different from the device 20), thus to another destination address. The data item 200C (10.0.0.1, 1000 -> 9.9.9.9, 8000) corresponds to a new connection, but shares the source address with another active connection. SNF1, receiving the egress data item, extracts the egress key and determines that the first set of state does not comprise any state corresponding to the extracted egress key. SNF1 also determines that the first set of states comprises an active state corresponding to the source address of the egress data item (active state corresponding to the processing of the previous data items 200A, 200B). Although the migration already started, the egress packet is processed by SNF1 without being forwarded to SNF2. As there is no port map entry (active state) in the port map table (set of states), SNF1 allocates a new port value among the unused values for the source IP address (for example 101) and stores a new entry in the key value store port map table (activate a new state).

Similarly, in the reverse direction, SNF1 receives an ingress data item 202C as a response to the egress data item 200C, and an ingress key is extracted from the ingress data item. As the ingress key corresponds to an active state of the first set of states (having been activated by SNF1 despite the migration started as described in Figure 2B), SNF1 processes the ingress data item. In case the extracted ingress key would not correspond to any active state, the data item would be forwarded to SNF2 (not represented), as the migration started.

**Figure 2D** represents the processing of data items by the migrating stateful functions SNF1, SNF2, wherein the first set of states of SNF1 does not comprise any active state corresponding to the source address of an egress data item received after the migration started. According to the illustrative example an egress data item 200D is received by SNF1 from the device 28 targeted to the device 22. SNF1, receiving the egress data item, determines that its set of state does not comprise any active state corresponding to the source address of the data item (source address of device 28) This is due to the fact that this is the first data item received from device 28 since the migration started. The egress data item 200D is forwarded without any processing by SNF1 to SNF2 over the data path 25.

SNF2 receiving the egress data item 200D from SNF1 over the data path 25 creates a new state in its own set of states managed independently from the set of states of SNF1 and processes the egress data item 200D according to the new active state.

In the reverse direction, SNF1 receives an ingress data item 202D sent in response to the egress data item 200D as the data flow has not yet been steered to SNF2. An ingress key is extracted from the received ingress data item 202D. As the extracted ingress key does not correspond to any active state in SNF1, the ingress data item 202D is advantageously forwarded to SNF2 over the data path 25, and the ingress data item 202D is processed by SNF2, thereby the corresponding active state is retrieved from the active states of SNF2, the addresses are translated accordingly, and the processed ingress data item 202D is sent back to the egress communication equipment 23 for being delivered to the device 28.

Forwarding egress data items from SNF1 to SNF2 only when there is no active state in SNF1 corresponding to source addresses of the egress data items, and otherwise keeping processing egress data items by SNF1 without forwarding to SNF2 as long as there remains active states corresponding to the source address of the egress data items in SNF1 allow to migrate SNF1 to SNF2 without needing to exchange any data information between both instances and without needing to freeze data connections while not losing any data during the migration.

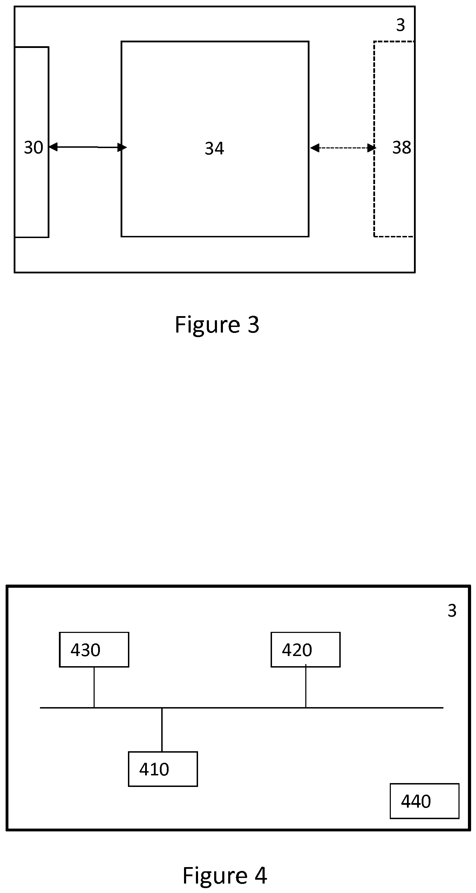

**Figure 3** represents a processing device 3 running an instance of a migrating stateful function according to a specific and non-limiting embodiment of the disclosed principles. A first stateful function is migrating from a first instance running on a processing device to a second stateful function running on a second instance running on the same or another processing device.

According to a specific and non-limiting embodiment of the principles, the processing device 3 comprises a first network interface 30, configured to send and receive data items to/from to/from a first network.

According to a specific and non-limiting embodiment of the principles, the processing device 3 further comprises an optional second network interface 38, configured to send and receive data items to/from to/from a second network.

According to different embodiments of the disclosed principles, the first 30 and the second 38 optional network interfaces 30 belongs to a set comprising:
- a wired LAN (Local Area Network) interface such as Ethernet, IEEE 802.3 or any wired interface of the IEEE 802 family of network interfaces.
- a WAN (Wide Area Network) interface such a 2G/3G/4G cellular networks, WiMax interface, xDSL, FFTx;
- a wireless LAN (Wireless Local Area Network) interface such as Bluetooth, WiFi in any flavor, or any kind of wireless interface of the IEEE 802 family of network interfaces;

More generally any network interface is compatible with the disclosed principles.

According to a first specific and non-limiting embodiment of the principles the first 30 and optional second 38 network interfaces are linked to a processing module 34 configured to receive egress and/or ingress data items from a data flow via the first 30 and/or the second 38 network interface. An egress data item is defined as belonging to a data exchange according to a communication protocol and being sent by a device having initiated the data exchange, while an ingress data item is defined as belonging to the data exchange according to the communication protocol and being sent by a participating device, different from the device having initiated the data exchange. Before the migration starts, the processing module 34 is configured to apply the first stateful function to all received data items according to a first set of states and to send the processed data item to the first 30 and/or second 38 network interfaces. After the migration starts, the processing module 34 is configured to apply the first stateful function to received egress data items only if an active state of a first set of states corresponds to the source address of the egress data items, and to send those processed egress data items to the first 30 and/or second 38 network interfaces. The processing module 34 is further configured to forward without processing a received egress data item to the second instance for applying the second stateful function by the second instance if there is no active state in the first set of states corresponding to the source address of the egress data item. The processing module 34 is further configured to inactivate the active states when no data item corresponding to the active states has been received over a first period of time. The processing module 34 is further configured to terminate the migration when all states of the set of states are inactive and no data item has been received over a second period of time, the data flow being steered to the second instance.

According to a specific and non-limiting embodiment of the disclosed principles, the processing device 3 is a gateway processing device deployable at customer premises for providing internet access and various home networking services. The processing module 34 is configured to execute several processing instances, among which a first instance is configured to run a first stateful network function communicating with other processing instances. For example, a vulnerability has been detected on the first stateful network function and has been patched on a second stateful network function providing the same functionality as the first stateful network function but in a more secure way. The processing module 34 is configured to download the program code of the second stateful network function, and to execute it on a second instance. Initially the second stateful network function starts but does not receive any data items (because all data items are received and processed by the first stateful network function). The processing module 34 is then configured to start a migration from the first stateful network function running on the first instance to the second stateful network function running on the second instance. The first stateful network function, being instructed to migrate to the second stateful network function applies the first stateful function to a received egress data item only if an active state corresponds to the source address of the egress data item, else the egress data item is forwarded by the first instance to the second instance of the processing module 34 for applying the second stateful network function by the second instance. The first stateful network function is further configured to inactivate any active state when no data item corresponding to that active state has been received over a first period of time. Progressively the data items are forwarded without processing by the first instance to the second instance where they are processed according to the second (patched more secure) stateful network function. When all the states of the first instance are inactive, all the data items are forwarded without processing by the first instance to the second instance where they are processed. The processing module 34 is further configured to steer the data items initially targeted to the first instance towards the second instance when all the states of the first set of states (of the first stateful network function) are inactive. Once the processing module 34 has been configured to steer all the data items to the second instance, the first instance does not receive any data item anymore and can be terminated. According to different variants, the processing module 34 is configured to terminate the first instance, or to keep it running up to the next reboot of the processing device 3.

**Figure 4** represents an exemplary architecture of the processing device 3 according to a specific and non-limiting embodiment of the disclosed principles. The processing device 3 comprises one or more processor(s) 410, which is(are), for example, a CPU, a GPU and/or a DSP (English acronym of Digital Signal Processor), along with internal memory 420 (e.g. RAM, ROM, EPROM). The processing device 3 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 3.

According to an exemplary and non-limiting embodiment, the processing device 3 further comprises a computer program stored in the memory 420. The computer program comprises instructions which, when executed by the processing device 3, in particular by the processor 410, make the processing device 3 carrying out the processing method described with reference to figure 1. According to a variant, the computer program is stored externally to the processing device 3 on a non-transitory digital data support, e.g. on an external storage medium such as a SD Card, HDD, CD-ROM, DVD, a read-only and/or DVD drive and/or a DVD Read/Write drive, all known in the art. The processing device 3 thus comprises an interface to read the computer program. Further, the processing device 3 could access one or more Universal Serial Bus (USB)-type storage devices (e.g., "memory sticks.") through corresponding USB ports (not shown).

According to exemplary and non-limiting embodiments, the processing device 3 belongs to a set comprising a gateway, a router, a communication device, a desktop computer, a server, a cloud computing instance.

According to a specific and non-limiting embodiment of the disclosed principles a method for migrating a first stateful function running on a first instance to a second stateful function running on instance is disclosed. The first and the second stateful functions process data items of a data flow according to respectively a first and a second set of states. The method comprises in the first instance:
- receiving an egress data item from the data flow, the egress data item comprising a source address of an initiator of a data exchange;
- applying the first stateful function to the egress data item if an active state of the first set of states corresponds to the source address of the egress data item, else migrating the first stateful function by:
   ∘ forwarding the egress data item to the second instance for applying the second stateful function by the second instance;
   ∘ inactivating the active state when no data item corresponding to the active state has been received over a period of time, the data flow being steered to the second instance when all states of the first set of states are inactive.

According to a variant, the active state corresponding to the source address is related to the egress data item, the first stateful function being applied according to the active state.

According to another variant, the active state corresponding to the source address is not related to the egress data item, the method further comprising activating a new state related to the egress data item, the first stateful function being applied according to the new active state.

According to another variant, applying the first stateful function to the egress data item comprises extracting an egress key from the egress data item and processing the egress data item according to the active state corresponding to the egress key.

According to another variant, the method further comprises receiving an ingress data item from the data flow, and if the first set of states comprises an active state corresponding to the ingress data item, processing the ingress data item according to the active state, else forwarding the ingress data item to the second instance for applying the second stateful function by the second instance.

According to another variant, the first stateful function operates between an egress network interface and an ingress network interface, the egress data item being received from the egress network interface, the ingress data item being received from the ingress network interface.

According to another variant, the first stateful function comprises a network address translation, and activating the new state comprises allocating a translated port identifier different from the translated port identifiers of already existing active states.

According to another variant, the first stateful function comprises a stateful firewall, and processing the egress and/or ingress data item comprises updating the active state with a time of reception of the data item.

According to another variant, the first stateful function is a separately upgradable module of a gateway, the first instance and the second instance both running on the gateway during the migration.

According to another variant, the first and the second stateful functions are a same version of a same stateful function.

According to another variant, the second stateful network function is a patched version of the first stateful function.

In a second aspect, a processing device for migrating a first stateful function running on a first instance to a second stateful function running on a second instance is also disclosed. The first instance is running on the first processing device, the first and the second stateful functions process data items of a data flow according to respectively a first and a second set of states. The first processing device comprises processing means for running the first instance, wherein the first instance is configured to
- receive an egress data item from the data flow, the data item comprising a source address of an initiator of a data exchange;
- apply the first stateful function to the egress data item if an active state of the first set of states corresponds to the source address of the egress data item, else migrating the first stateful function by:
   ∘ forwarding the egress data item to the second instance for applying the second stateful function by the second instance;
   ∘ inactivating the active state when no data item corresponding to the active state has been received over a first period of time, the data flow being steered to the second instance when all states of the first set of states are inactive.

According to a variant, the processing device further comprises means for running the second instance and means for steering the data flow from the first instance to the second instance after all the states of the first set of states are inactive, wherein the means for running the second instance are configured to apply the second stateful function on any data item received from the first instance and from the steered data flow.

According to another variant, the second stateful network function is a patched version of the first stateful function.

## Claims

1. A method for migrating a first stateful function running on a first instance (SNF1) to a second stateful function running on a second instance (SNF2), the first and the second stateful functions processing data items (200A, 202A, 200B, 202B, 200C, 202C) of a data flow according to respectively a first and a second set of states, the method comprising in the first instance (SNF1):
- receiving an egress data item (200A, 200B, 200C, 200D) from the data flow, the egress data item (200A, 200B, 200C, 200D) comprising a source address of an initiator of a data exchange;
- applying the first stateful function to the egress data item (200A, 200B, 200C) if an active state of the first set of states corresponds to the source address of the egress data item, else migrating the first stateful function by:
∘ forwarding the egress data item (200D) to the second instance (SNF2) for applying the second stateful function by the second instance (SNF2);
∘ inactivating the active state when no data item corresponding to the active state has been received over a period of time, the data flow being steered to the second instance (SNF2) when all states of the first set of states are inactive.

2. The method according to claim 1, wherein the active state corresponding to the source address is related to the egress data item (200B), the first stateful function being applied according to the active state.

3. The method according to claim 1, wherein the active state corresponding to the source address is not related to the egress data item (200C), the method further comprising activating a new state related to the egress data item (200C), the first stateful function being applied according to the new active state.

4. The method according to any of claims 1 to 3, wherein applying the first stateful function to the egress data item (200A, 200B, 200C) comprises extracting an egress key from the egress data item (200A, 200B, 200C) and processing the egress data item (200A, 200B, 200C) according to the active state corresponding to the egress key.

5. The method according to any of claims 1 to 4, further comprising receiving an ingress data item (202A, 202B, 202C, 202D) from the data flow, and if the first set of states comprises an active state corresponding to the ingress data item, processing the ingress data item according to the active state, else forwarding the ingress data item to the second instance (SNF2) for applying the second stateful function by the second instance (SNF2).

6. The method according to claim 5, wherein the first stateful function operates between an egress network interface (230) and an ingress network (240) interface, the egress data item being received from the egress network interface (230), the ingress data item being received from the ingress network interface (240).

7. The method according to claim 6, wherein the first stateful function comprises a network address translation, and activating the new state comprises allocating a translated port identifier different from the translated port identifiers of already existing active states.

8. The method according to claim 6, wherein the first stateful function comprises a stateful firewall, and processing the egress and/or ingress data item comprises updating the active state with a time of reception of the data item.

9. The method according to any of claims 1 to 8, wherein the first stateful function is a separately upgradable module of a gateway, the first instance (SNF1) and the second instance (SNF2) both running on the gateway during the migration.

10. The method according to any of claims 1 to 9, wherein the first and the second stateful functions are a same version of a same stateful function.

11. The method according to any of claims 1 to 9, wherein the second stateful network function is a patched version of the first stateful function.

12. A processing device (3) for migrating a first stateful function running on a first instance to a second stateful function running on a second instance, the first and the second stateful functions processing data items (200A, 202A, 200B, 202B, 200C, 202C) of a data flow according to respectively a first and a second set of states, the processing device (3) comprising means for running the first instance (SNF1), wherein the first instance (SNF1) is configured to:
- receive an egress data item (200A, 200B, 200C, 200D) from the data flow, the data item (200A, 200B, 200C, 200D) comprising a source address of an initiator of a data exchange;
- apply the first stateful function to the egress data item (200A, 200B, 200C) if an active state of the first set of states corresponds to the source address of the egress data item, else migrating the first stateful function by:
∘ forwarding the egress data item (200D) to the second instance (SNF2) for applying the second stateful function by the second instance (SNF2);
∘ inactivating the active state when no data item corresponding to the active state has been received over a first period of time, the data flow being steered to the second instance (SNF2) when all states of the first set of states are inactive.

13. The processing device (3) according to claim 12, further comprising means for running the second instance (SNF2) and means for steering the data flow from the first instance (SNF1) to the second instance (SNF2) after all the states of the first set of states are inactive, wherein the means for running the second instance (SNF2) are configured to apply the second stateful function on any data item received from the first instance (SNF1) and from the steered data flow.

14. The processing device (3) according to claim 13, wherein the second stateful network function is a patched version of the first stateful function.

15. A computer program product for migrating a first stateful function running on a first instance to a second stateful function running on a second instance, the computer program product comprising program code instructions executable by a processor for performing the method according to any of claims 1 to 11.
